(19) Europäisches Patentamt
European Patent Office
Office européen des brevets

(11) EP 0 327 142 B1

(12) **EUROPEAN PATENT SPECIFICATION**

(45) Date of publication and mention of the grant of the patent:
**10.01.1996 Bulletin 1996/02**

(51) Int. Cl.$^6$: **B32B 27/12**, B32B 27/38, B32B 5/00, C08J 5/24

(21) Application number: **89105533.7**

(22) Date of filing: **13.02.1985**

(54) **Resin matrix composites**

Kunststoff-Matrix-Komposite

Composés résine-matrices

(84) Designated Contracting States:
**AT BE CH DE FR GB IT LI NL SE**

(30) Priority: **30.03.1984 US 595314**
**01.06.1984 US 616540**

(43) Date of publication of application:
**09.08.1989 Bulletin 1989/32**

(62) Application number of the earlier application in accordance with Art. 76 EPC: **85101551.1**

(73) Proprietor: **CYTEC TECHNOLOGY CORP.**
**Wilmington, Delaware 19801 (US)**

(72) Inventors:
- **Hirschbuehler, Kevin Richard**
  **Bel Air, MD 21014 (US)**
- **Stern, Bruce Allen**
  **Fallston, MD 21047 (US)**
- **Evans, Robert E.**
  **Trumbull, CT 06611 (US)**

(74) Representative: **DIEHL GLAESER HILTL & PARTNER**
**D-80603 München (DE)**

(56) References cited:
**FR-A- 2 080 597**
**FR-A- 2 447 274**
**GB-A- 1 299 177**
**US-A- 3 472 730**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Rank Xerox (UK) Business Services
2.9.1/3.4

## Description

This invention relates to to improved interleafed fiber resin matrix composite having high impact strength.

High strength to weight materials constructed from fiber resin matrix composites have become widely used in many industries where strength, corrosion resistance and light weight are desirable. For example, resin matrix materials are particularly well suited for use in aircraft structural members. Sporting equipment, such as tennis rackets and golf clubs, has also been successfully constructed from such materials.

Bi-layer composites have been described therein which comprise (A) a fiber resin matrix layer of high-strength reinforcing filaments coated with a thermosetting epoxy resin and (B) a discrete interleaf layer of modified thermosetting epoxy resin, containing a rubbery, extensible polymer material. The composites are commonly formed into prepreg tapes, wherein the filaments are arranged in a flat, unidirectional array, and the tapes used to build, or "lay-up", a structural laminate, where the interleaf layers provide special advantages in terms of shear and impact strength.

When the reinforcing filaments are in the configuration of a fabric, however, great difficulty has been encountered in maintaining a continuous interleaf layer. When the bi-layer prepreg fabrics are laminated and cured under pressure, the thin interleaf resin layer is broken up, largely eliminating any improvements in performance. This is at least partially due to the construction of reinforcing fabrics: Fiber bundles, or "tows", of about 1,000 to 12,000 individual fibers are interwoven to form a high-strength fabric sheet, which is in turn coated and impregnated with thermosetting resin. On a microscopic level, the surface of such a fabric is very uneven, and a thin interleaf layer, when pressed between fabric sheets and cured, is easily disrupted.

Attempting to preserve the interleaf layer by changing the curing process or radically altering the interleaf layer are imperfect solutions: Changes in the curing conditions or chemistry increases the cost, time and expertise required and often result in inferior composites; applying a thicker layer of interleaf resin or reinforcing it also adds cost but also, and much more importantly, abrogates the high strength-to-weight ratio that gives fiber resin matrix materials their advantage over metals.

Fiber resin matrix composites are typically comprised of a dense layer of strong reinforcing filaments coated with a thermoset resin to form a curable sheet or tape. The composite can then be formed to desired shapes and cured. Numerous reinforced resin matrix composites have been described in the art, of which U.S. Patents 2,561,449 (Ruderman), 2,810,674 (Madden), 3,010,848 (Rochas et al), 3,649,435 (Varlas), 3,755,061 (Schurb), 3,914,494 (Park), 4,182,495 (Borgmeier et al), 4,309,473 (Minamisaway et al), 4,343,843 (Johnson et al) and 3,472,730 (Frigstad) and British Patent No. 1,182,377 are representative.

It is known that composite laminates can be improved by interleafing thermoset films between the fiber-reinforced layers. In the Frigstad patent, U.S 3,472,730, for example, filament-reinforced resinous sheeting is disclosed which comprises a thin layer of high-strength filaments coated with a heatcurable resin composition and a separate exterior film on at least one side of the filament-reinforced layer comprising a heat-curable resin composition modified with a resin that contains elastomeric material. It has been proposed to employ interleaf resins comprising a thermosetting epoxy resin modified with 8-70% by weight of a rubbery vinyl addition polymer such that the shear modulus is greater than 50,000 psi and yield strength is greater than 3,000 psi at high temperatures provide fiber resin matrix composites having greatly improved resistance to impact damage over a wide range of temperatures. It has also been proposed to use lightweight woven cloths (scrims) in thermoset interleafed fabric resin matrix composites to improve the impact resistance of composites reinforced by high-strength woven fabrics.

GB-A-1 299 177 is directed to the preparation of fiber reinforced thermoset composites using a film of thermoset resin which is solid at room temperature, but which will soften sufficiently on warming to allow impregnation of the fibers. Thus, the principal teaching of the reference is to avoid handling problems caused by using liquid resins.

The reference discloses only three methods for using reinforcement materials and suggests that a number of materials may be equivalent as reinforcement films, including metal foils, plastic films, and natural or synthetic rubbers. There is no suggestion in the reference whatsoever that the use of one of these materials as interlayers would provide unexpected enhancement in compression strength after impact without reduction in mechanical properties at elevated temperature and humidities.

According to the present invention, it has been discovered that certain resin composites comprising alternating layers of a filament-reinforced thermosetting resin, called a fiber resin matrix layer, and of a thermoplastic resin, called an interleaf resin layer, show greatly improved compression strength after impact without reduction in mechanical properties at elevated temperatures. Furthermore, by matching the fiber matrix resin and the thermoplastic interleaf resin components according to this invention to minimize diffusion and migration during cure, high-strength, impact-resistant composites may be achieved which show marked improvement over known materials.

In accordance with this invention interleafed fiber resin matrix composites are provided, the composites comprising:

(A) a fiber resin matrix layer comprising (i) high-strength reinforcing filaments, preferably about 60%-70% by weight, and (ii) a thermosetting resin composition, preferably about 30%-40% by weight, coating said filaments, and

(B) a discrete interleaf resin layer comprising a thermoplastic resin, adhesively bondable to the fiber resin matrix layer, wherein said thermosetting resin composition (A)(ii) exhibits shear modulus of at least 3445 N/mm$^2$ (50,000 psi) at high temperatures under wet conditions, and said interleaf resin (B) exhibits shear modulus above 3445 N/mm$^2$ (50,000 psi) and a yield strength above 207 N/mm$^2$ (3,000 psi) at high temperatures. Preferably the glass transition temperature, Tg, of the thermoplastic resin is relatively high, e.g., above 140°C, to provide thermal stability at upper use temperatures.

For the purposes of the present invention, the term "high temperatures" and "upper use temperatures" refers to temperatures in and above a range of from 82 to 204°C (180°F to 400°F). The term "wet conditions" refers to a test condition where the sample to be tested has been immersed in water at 71°C (160°F) for 14 days, or to any environmental exposure to moisture that produces a like condition. The term "thermoplastic resin" refers to a resin which is wholly thermoplastic as well as to thermoplastic/thermosetting resin blends wherein the thermosetting component is a minor constituent of the blend, present in an amount of no more than 40% by weight; based on the weight of the blend.

FIGURE 1 is a schematic of the process of preparing a fiber resin matrix composite of the present invention.

FIGURE 2 is a schematic of a process for providing a thermoplastic interleafing material on a fiber resin matrix in accordance with this invention.

FIGURE 3 is an enlarged cross-sectional view of the thermoplastic interleafed fiber resin matrix tape of the subject invention.

FIGURE 4 is a portion of a stack of composites, illustrating (with exaggerated crosses) the desirable area of adhesive bonding between the discrete layers in cured composites according to the present invention.

The present invention is directed to the provision of a laminate layer referred to as an interleaf for use in a composite structure of a fiber resin matrix and the interleaf.

The fundamental discovery underlying the present invention is that a resin having particular mechanical properties, when used to provide thin, discrete layers between reinforcing fabric layers of a fiber resin matrix fabric composite, results in a composite having unique toughness, shear resistance, and resistance to impact damage, and these properties are exhibited over a broad range of temperatures, e.g., from -55°C to 93°C (-67°F to 200°F). This performance is achieved by pairing a matrix resin having particular high-temperature properties and an interleaf resin having some elastomeric properties to form a composite structure of alternating fabric and interleaf layers.

Thus, the invention further resides in the fact that resins have been developed that are well suited for use as particular interleaf materials to provide a fiber resin matrix and interleaf resin composite of superior toughness.

It is particularly significant in this invention that the interleaf resin and the resin of the fiber resin matrix be sufficiently compatible to form strong cross-links across the resin interface; yet, the interleaf material must be capable of being viscosity controlled to prevent intermixing, and a discrete interleaf layer must be achieved.

It has been discovered that the interleafed composites of the present invention, besides exhibiting the high compression, tensile and flexural strengths characteristic of fiber resin matrices, also exhibit an unexpected ability to withstand impact damage, and over a wide range of temperatures (e.g., samples are tested at from -55°C to 93°C (-67°F to +200°F)). The interleafed composites of the present invention, for example, show greater toughness, greater resistance to shear impact, greater tolerance of impact damage and greater resistance to crack propagation than conventional fiber resin matrix composites.

The dynamic relationship between the fiber resin matrix component and the interleaf resin component of the present composites is complex, however in general the interleaf resin provides toughness, i.e., high impact strength, to the composite at all temperatures, while the matrix resin is highly resistant to the effects of wet conditions and changes in temperature. The interleaf resin layers are also designed to protect the fiber matrix layers by absorbing or otherwise "heading off" damaging forces before they reach levels harmful to the fiber resin matrix. When subjected to shear forces, for instance, the interleaf materials suitable for the purposes herein show great elongation above a certain shear stress level, and the components are paired so that the interleaf resin layer will flex and absorb the energy of the shear load as it approaches a level at which the fiber resin matrix will fail. If impact loads reach such levels that the structure cracks, the high strain capabilities of the interleaf layer help to maintain the integrity of the structure by increasing the energy required to drive cracks through the laminate. In this way crack propagation, even after damage, is curtailed; and by selecting the components to provide this sort of interprotective relationship, high-performance composites can be achieved.

The reinforcing filaments useful in the present invention include, but are not limited to, filaments comprised of glass, carbon, graphite, silicon carbide, boron, polyaramide, polyester, polyamide, rayon, polybenzimidazole, polybenzothiazole, metal-coated such filaments, for example nickel-coated and/or silver-coated graphite fibers and filaments, or combinations of such filaments. In applications demanding a high strength to weight ratio or shear strength, carbon fibers, graphite filaments, polyaramid filaments or nickel-plated graphite filaments, such as disclosed in published European Patent Office Application Serial No. 83101195.2 are preferred.

In the practice of this invention individual reinforcing filaments are gathered in bundles, or tows, of approximately 1,000 to 12,000 filaments each and the tows are interwoven to form a flexible, strong fabric. Although reinforcing fabrics

may appear to have a smooth surface, on a microscopic level the woven surface of the fabric is sufficiently irregular to disrupt the thin (e.g., about 0.013 to 0.076 mm; about 0.0005 to 0.003 inch thick) interleaf layer under common curing conditions.

The epoxy resin composition used to coat the reinforcing filaments (matrix resin) is comprised primarily of epoxy compounds having more than one epoxide group per molecule available for reaction. Such epoxy prepolymers include, but are not limited to, polyfunctional ethers of polyvalent phenols, for example pyrocatechol; resorcinol; hydroquinone; 4,4'-dihydroxydiphenyl methane; 4,4'-dihydroxy-3,3'-dimethyldiphenyl methane; 4,4'-dihydroxydiphenyl dimethyl methane; 4,4'-dihydroxydiphenyl methyl methane; 4,4'-dihydroxydiphenyl cyclohexane; 4,4'-dihydroxy3,3'-dimethyldiphenyl propane; 4,4'-dihydroxydiphenyl sulphone; or tris-(4-hydroxyphenyl) methane; polyglycidyl ethers of the chlorination and bromination products of the above-mentioned diphenols; polyglycidyl ethers of novolacs (i.e., reaction products of monohydric or polyhydric phenols with aldehydes, formaldehyde in particular, in the presence of acid catalysts); polyglycidyl ethers of diphenols obtained by esterifying 2 mols of the sodium salt of an aromatic hydroxycarboxylic acid with 1 mol of a dihalogenoalkane or dihalogen dialkyl ether (see, U.K. 1,017,612); and polyglycidyl ethers of polyphenols obtained by condensing phenols and long-chain halogen paraffins containing at least 2 halogen atoms (see, U.K. 1,024,288).

Other suitable compounds include polyepoxy compounds based on aromatic amines and epichlorohydrin, for example N,N'-diglycidylaniline; N,N'-dimethyl-N,N'-diglycidyl-4,4'-diaminodiphenyl methane; N-diglycidyl-4-aminophenyl glycidyl ether; N,N,N',N'-tetraglycidyl-4,4'-diaminodiphenyl methane; and N,N,N',N'-tetraglycidyl-1,3-propylene bis-4-aminobenzoate, the latter two compounds being most preferred.

Glycidyl esters and/or epoxycyclohexyl esters or aromatic, aliphatic and cycloaliphatic polycarboxylic acids, for example phthalic acid diglycidyl ester and adipic ester diglycidyl and glycidyl esters of reaction products of 1 mol of an aromatic or cycloaliphatic dicarboxylic acid anhydride and ½ mol of a diol or 1/n mol of a polyol with n hydroxyl groups, or hexahydrophthalic acid diglycidyl esters, optionally substituted by methyl groups, are also suitable.

Glycidyl ethers of polyhydric alcohols, for example of 1,4-butanediol; 1,4-butenediol; glycerol; 1,1,1-trimethylol propane; pentaerythritol and polyethylene glycols may also be used. Triglycidyl isocyanurate; and polyglycidyl thioethers of polyvalent thiols, for example of bis mercaptomethylbenzene; and diglycidyltrimethylene sulphone, are also suitable.

The epoxy resin composition will also include a curing agent for the epoxy resin. Such curing agents are well known to those skilled in the art, and preferred curing agents for the purposes herein will be diamines, including, but not limited to, diaminodiphenyl sulphone, diaminodiphenyl methane, phenylenediamine, etc.

The amount of curing agent necessary for a particular application can be readily determined by persons skilled in the art and will vary according to the precise makeup of the resin composition, the curing conditions desired and other factors. However, by way of illustration, where a diamine curing agent is employed, from about 20 to 40 weight percent, most preferably about 27 to 31 weight percent, based on the total epoxy resin, has been found suitable.

Fillers, dyes, pigments, plasticizers, curing catalysts and other such conventional additives and processing aids may be added to the epoxy resin compositions described herein before curing to influence the properties of the final resin composite.

The viscosity of the interleaf resin must be sufficiently high to provide the interleaf with the necessary toughness and to maintain the interleaf resin as a discrete layer adjacent to the fabric resin matrix. As previously mentioned, however, crosslinking at the interface between the two resin layers is desireable (and most preferred). This condition will occur when the resin of the interleaf is chemically compatible with the resin of the fiber resin matrix, so as to promote crosslinking.

It has been observed that the resin of the interleaf containing the necessary amount of modifier will have a Flow Test Number (flow percent), N, measuring less than about 12 from the following viscosity test:

<u>FLOW (VISCOSITY) TEST</u>

1. Prepare a laminate by coating 0.097 kg/m$^2$ (0.02 pounds per square foot) on interleaf resin onto 120 glass fabric.
2. Stack four, 10.1 cm x 10.1 cm (4" x 4") square plies of the laminate.
3. Weigh the uncured 4-ply stack.
4. Cure the stack at 163°C (325°F) and 4.13 N/mm$^2$ (60 psi) for 15 minutes.
5. Trim all resin that is squeezed beyond the edge of the 120 glass fabric during the curing step (4).
6. Weigh the cured, trimmed stack.
7. Obtain the flow percentage, N, as follows:

$$N = \frac{(\text{weight of uncured stack}) - (\text{weight of trimmed, cured stack})}{(\text{weight of uncured stack})} \times 100$$

A flow percent N below about 12 is required for optimal performance under this invention and preferably the N flow number will be between 5.5 and 7.7. Also, experimental data indicate that poor interleaf material is obtained when the N flow number is above about 14.6.

In addition to the flow characteristics of a resin, an indication of the perfomance of laminated fiber resin matrix composites can be gained by subjecting cured samples of the resins to shear forces, and measuring the elongation (in cm;inches) as a function of applied force (in N;lbs). The data from this test may be plotted, which typically generates a curve that ends at the point of applied force and elongation where the sample breaks. From this curve, the shear strain and shear stress of the resins can be calculated and the characteristic stress/strain curves plotted. The testing procedure is described more fully in Krieger, Jr., R.B., "Stiffness Characteristics of Structural Adhesives For Stress Analysis in Hostile Environment," American Cyanamid Co., Bloomingdale Plant, Havre de Grace, MD (May, 1979), incorporated herein by reference.

When the fiber resin matrix and interleaf resin are properly matched according to the present invention, the shear stress/strain curves at various temperatures for the matrix resin and the interleaf resin show high modulus and other properties (yield, strain to failure, ultimate stress), discussed in more detail below.

In practice, the interleaf material of this invention can be used to form a variety of different parts. For example, cover structures for airplane parts may be formed of fiber resin matrix-interleaf sheets stacked and cured to form 2.54 mm (0.10-inch) to 6.35 mm (0.25-inch) thin structural parts, for example wing and fuselage components. The fabric sheeting of this invention is suitable for primary structures having the highest performance requirements.

The fiber resin matrix-interleaf fabric sheets range in thickness from 0.12 to 1.01 mm (0.005 to 0.04 inch), the thickness varying according to resin content, type of fabric used, fiber count, etc. The fiber resin matrix-interleaf fabric sheets are also commonly laminated with the direction of the fabric weave oriented in different directions, e.g., 0° and 45° relative, depending on the stress requirements of the part.

The relative thickness of the fabric resin matrix layer will be in the range of about 0.12 mm to 0.35 mm (0.005 in to 0.014 in).

The degree of elongation after reaching the yield point is important. The interleaf resin must have an overall elongation or strain to failure of at least 6%, preferably 9%, at -55°C (-67°F), and a strain to failure at room temperature of at least about 15%, preferably 25% or greater. This property is less important at elevated temperatures, but preferred interleaf resins will have a strain to failure of over 20%, most preferably over 50% at 93°C (200°F).

A fundamental discovery underlying the present invention is that a resin having particular mechanical properties, when used to provide thin, discrete layers between fiber-reinforced layers of a fiber resin matrix composite, results in a composite having unique toughness, shear resistance, and resistance to impact damage, and these properties are maintained at elevated temperatures, e.g., up to 132°C (270°F), and even higher. This performance is achieved by pairing a matrix resin having particular high-temperature properties and a thermoplastic interleaf resin having adhesive bonding properties, a relatively high glass transition temperature and a relatively high strain to failure to form a composite structure of alternating fiber resin matrix and interleaft resin layers.

This invention resides in the use of thermoplastic materials as particular interleaf materials, making possible fiber resin matrix and interleaf resin composites of superior toughness.

It is a particularly significant aspect of this invention that the interleaf material comprises a thermoplastic material, that it contains at most a minor portion of thermosetting materials and that the interleaf resin and the resin of the fiber resin matrix are sufficiently compatible to form an adhesive bond at the resin interface. On a microscopic level, there may be an extremely thin layer at the matrix resin/interleaf resin interface, characteristic of adhesive-type bonding, where the thermoplastic interleaf material dissolves slightly in the matrix resin; however, aside from this bonding interface, the interleaf material must be capable of maintaining a discrete interleaf layer, and no general intermixing of the interleaf layer and resin matrix layer occurs.

The interleafed composites of the present invention exhibit high compression, tensile and flexural strengths as well as the ability to withstand impact damage. The interleafed composites of the present invention show greater toughness, greater resistance to shear impact, greater tolerance of impact damage and greater resistance to crack propagation than conventional fiber resin matrix composites. With respect to state-of-the-art thermosetting interleafs, thinner thermoplastic films surprisingly are equivalent to thicker thermosetting films, with respect to their toughness. With conventional thermosetting interleafs, it is not possible to employ interleaf thicknesses below about 0.025 mm (0.001 inch) without significant loss of toughness of the composite, however the thermoplastic interleaf in the present invention may be utilized at such low thicknesses, e.g., on the order of 0.012 mm (0.0005 inch), without adverse effect on toughness properties.

As seen in FIGURE 1, the basic fiber matrix material may be produced by delivering reinforcing filaments 2 through conventional eye-boards 4 and 6 to a pressure roller assembly 8. The curable thermo-setting resin composition (matrix resin) is coated in a layer 10 from a conventional film coating applicator 12 onto a substrate such as release paper 14 and passed through the pressure roller assembly 8. Release paper 16 is also delivered to the pressure roller assembly 8.

The pressure rollers 8 are set at a temperature and pressure for imbedding the fibers 2 in the resin layer 10 to form a fiber resin matrix 18. Practice has taught that a temperature in the range of 88°C (190°F) and pressures of 4450 N (one thousand pounds) over a 38 cm (fifteen inch) center are suitable for producing a fiber resin matrix 18.

The fibers 2, the substrate 14 with resin layer 10 and the release paper 16 are delivered to the pressure rollers 8 and passed therethrough at the rate of 0.91-6.08 m/minute (3-20 feet/minute.

The feed of fiber 2 band resin layer 10 to the pressure rollers 8 is selected to produce a fiber resin matrix of 30-40 weight percent (preferably 34 weight percent) resin and 60-70 weight percent (preferably 66 weight percent) fiber. For example, 120 filaments of 6K carbon fibers are delivered within a 30.5 cm (twelve inch) width to the pressure rollers 8 with a layer of resin 0.063 to 0.087 $kg/m^2$ (.013 to .018 pounds per square foot). The resulting fiber resin matrix 18 is thus reinforced by a closely packed array of filaments. Thereafter, as shown in FIGURE 2, the release paper on one side of the fiber resin matrix 18 is removed and the fiber resin matrix is passed through another set of pressure rollers 60 for the application of the interleaf material 62 to the fiber resin matrix 58.

A layer of interleaf material 22 is typically extruded (by hot melt extrusion), or cast out of solvent, onto a carrier 28, cooled or dried, then laminated with the fiber resin matrix 58 through pressure rollers 20. The interleaf material 22 is deposited to provide an interleaf layer of about 0.010 to 0.101 mm (0.0004 to 0.004 inches) thickness. The exposed surface of the fiber resin matrix 18 is presented to the interleaf material 22 and the two are joined by the inherent adhesive nature of the matrix resin 18. The interleaf material is essentially thermoplastic and virtually without any adhesive characteristics.

An interleafed fiber resin matrix composite 24 is thus produced and appears as shown in FIGURE 3.

The reinforcing filaments useful in this aspect of the present invention have been illustrated above.

Thermosetting resin compositions potentially useful as the matrix resin in the present invention include epoxy, polyimide, bis maleimide and acetylene-terminated resins.

Polyimides potentially useful as matrix resins in the practice of the present invention include the polyimides disclosed in U.S. Patent Nos. 3,528,950; 3,745,149; 4,233,258; and 4,166,170.

Bis maleimide resins which may be employed as the matrix resin include bis maleimides based on the following monomers:

(i) 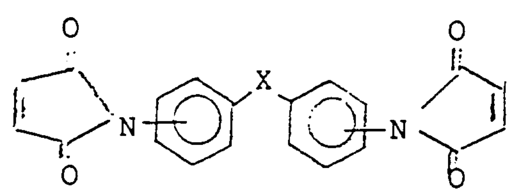

wherein the isomeric species are <u>meta, meta</u>; <u>meta, para</u> or <u>para, para</u> and X =-$CH_2$-,-O-,-S-, or

$$\overset{O}{-C-}$$ ;

(ii) 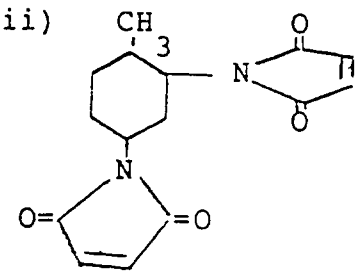 ;

(iii) 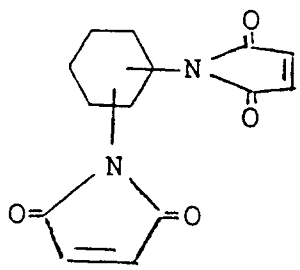 meta or para ;

(iv) 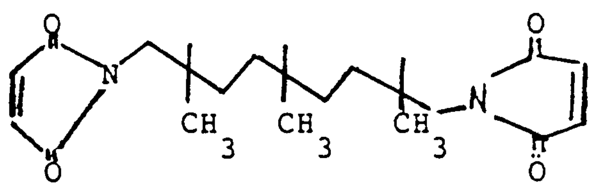 ; and

(v) 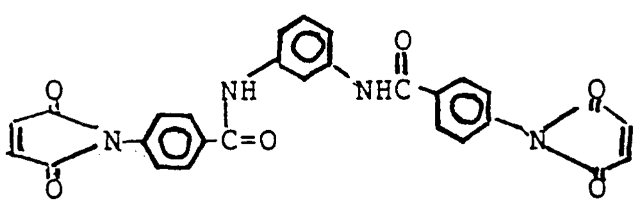 .

Acetylene-terminated resins which may be utilized as the matrix resin include resins based on the following monomers:

(i) 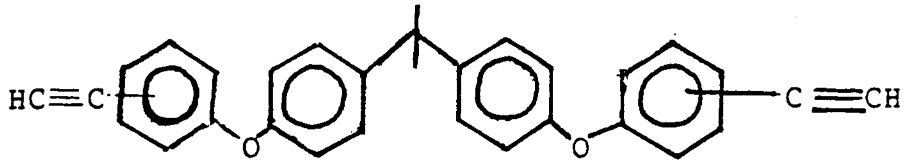 ;

(ii) 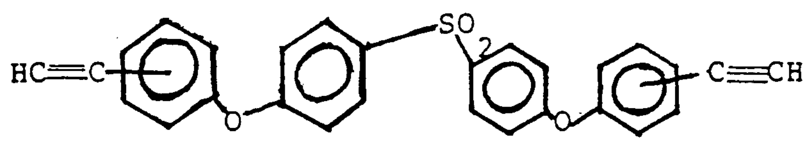 ;

(iii) 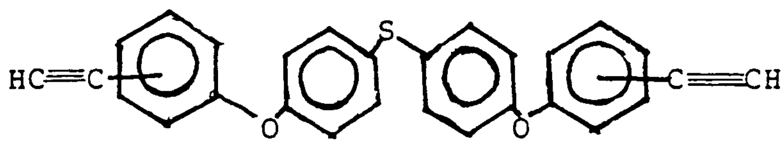 ; and

(iv) 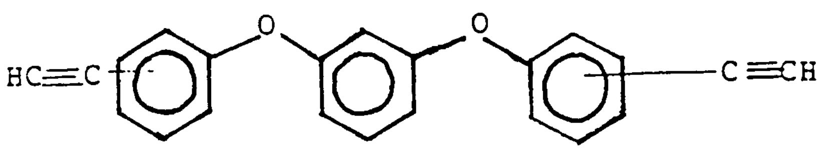 ;

wherein the - C≡CH substituents each independently may be meta- or para - positioned.

The thermoplastic resin of the interleaf comprises a high molecular weight engineering thermoplastic, much as a polyester, a polyamide, a polyaramid, a polyarylate, a polycarbonate, a poly(ester carbonate), a polybenzimidazole, a polyimide, a polyether imide, a polyamide imide, and the like. Preferably the thermoplastic will be a polyether ether ketone, abbreviated PEEK (ICI), a polyimide, e.g., KAPTON® (DuPont), or a polyether imide, e.g., ULTEM® (General Electric). As indicated, the thermoplastic resin may contain a minor amount (up to 40% by weight) of a thermosetting resin, which may for example be of the same composition as the matrix resin, as may be necessary or desirable in a given application to achieve suitable solvent resistance or other material properties of the interleaf. In addition, it may be advantageous in the practice of the present invention to utilize reinforcing materials in the interleaf, such as mat scrim, whiskers, particulates, chopped fibers or other second phase reinforcement, and in general the reinforcing material may suitably be employed in various amounts, such as for example up to about 50% by weight based on the total weight of the interleaf.

It has been discovered that in order to provide the unique advantages of the present invention, the thermosetting resin compositions, that is, the matrix resin (which coats the reinforcing filaments), and the interleaf resin must exhibit specific properties. The matrix resin, when tested "neat", or without reinforcement, must show a minimum stiffness when subjected to shear forces, especially at high temperatures and under wet condition. The matrix resin must have a shear modulus of at least 6203 N/mm$^2$ (90,000 psi) under hot, dry conditions, e.g., when subjected to shear at 45°C-68°C (180°F-270°F), or a shear modulus of at least 3445 N/mm$^2$ (50,000 psi) under hot, wet conditions, e.g., when subjected to shear at 45°C-68°C (180°F-270°F) after soaking in water at 71°C (160°F) for 14 days. It is also necessary that the matrix resin has a shear modulus above about 6890 (100,000) at room temperature and extremely low temperatures, i.e., -55°C (-67°F), however, this is ordinarily the case where the modulus at 45°C-93°C (180°-200°F) is as high as 3445 N/mm$^2$ (50,000 psi). Preferred, matrix resin compositions will show an initial shear modulus of 6203 N/mm$^2$ (90,000 psi)

or above under hot, wet conditions, and will show an initial shear modulus of 8957 $N/mm^2$ (130,000 psi) or above at room temperature and low temperatures. The most preferred thermosetting resins for use as a matrix resin will also exhibit high strength, for example an ultimate stress over 207 $N/mm^2$ (3000 psi), most preferably 345 $N/mm^2$ (5000 psi) or above.

The interleaf resin must also exhibit a minimum initial shear modulus, and in addition the interleaf resin must show elongation above a minimum stress. This initial modulus is believed to transfer loads between the layers of the reinforcing fibers without large deformation of the structure. For the purposes herein, the interleaf material must have an initial shear modulus above 3445 $N/mm^2$ (50,000 psi) at high temperatures, preferably above 6203 $N/mm^2$ (90,000 psi) at 45°C-68°C (180°F-270°F). At room temperature the initial shear modulus for the interleaf should be at least 6889 $N/mm^2$ (100,000 psi) (preferably at least 8957 $N/mm^2$; 130,000 psi), and at -55°C (-67°F) the shear modulus should be at least 8957 $N/mm^2$ (130,000 psi) (preferably at least 10290 $N/mm^2$; 150,000 psi); however, as with the matrix resin, such values at room temperature and low temperatures would be expected with high shear modulus at elevated temperatures. Most preferably, the interleaf resin will be slightly soluble in the uncured or partially cured thermosetting matrix resin at temperatures used to form the composites. This aids in providing adhesive bonding at each interface. The interleaf resin must, of course, also be able to survive the curing temperatures, usually about 177°C (350°F), that the composites are subjected to.

The interleaf resin shows an initial rigidity (high modulus) when subjected to shear but at a certain level of shear stress, shows elongation (high ultimate strain). The point at which the resin begins to show high elongation in response to stress is the "yield strength" of the resin, and for the purposes herein, this must be at least 207 $N/mm^2$ (3000 psi) at high temperatures. Most preferred interleaf resins will have a room temperature yield strength of at least 413 $N/mm^2$ (6000 psi) and a high temperature yield strength of at least 345 $N/mm^2$ (5000 psi).

In order that those skilled in the art may better understand the practice of the invention, the following examples are included by way of illustration, and not by way of limitation.

EXAMPLE 1

A matrix resin according to the present invention was made according to the following formulation:

| | parts by weight |
|---|---|
| tetra(4,4')N-glycidyl methylene dianiline (Ciba Geigy Araldite® MY-720) | 80 |
| tetraglycidoxy tetraphenylethane (Shell Epon® 1031) | 20 |
| trimethylene glycol di-para-aminobenzoate (Polaroid Polacure® 740 M) | 44 |
| fumed silica $(SiO_2)_2$ (Cabot Cab-o-Sil® M-5) | 6 |
| reaction product of toluene diisocyanate and dimethylamine | 1 |

A fiber resin matrix was formed by coating the above formulation on a layer of collimated graphite fibers. Composites were formed as shown in FIGURE 3, by applying to the aforementioned fiber resin matrix an interleaf film, approximately 0.012 mm (0.0005 inches) thick, of a polyether polyimide (ULTEM®), which was cast out of solvent. The thermoplastic interleaf resin formed a discrete layer adjacent to the fiber resin matrix having an adhesive bond at the interface between the two layers.

Composites were stacked and autoclave cured at 177°C (350°F) and 6.89 N/mm (100 psi) for 2 hours to produce a structural part. Stacks of eight plies, all arranged with collimated fibers, i.e., extending in the same direction (0°), were prepared for the Unidirectional Compresion Strength, or UNI-COMP, test. Stacks of sixteen plies with the fibers oriented equally at 0°, 90° and ± 45° were prepared for the Quasi-isotropic Compression Strength, or QUASI-COMP, test. Stacks of thirty-six plies with the fibers oriented at relative angles of 0°, 90° and ±45° were prepared for the Compression

Strength After Impact, or COMP/IMPACT, test. The laminates exhibited the following properties:

| Temp. (°C) | UNI-COMP (KSI) | QUASI-COMP (KSI) | COMP/IMPACT (1500 cm·4.45/cm) (1500 in-lbs/in) |
|---|---|---|---|
| 23° | 181.4 | 97.2 | 51,000 |
| 93° | 163.5 | 83.8 | --- |
| 132° | 130.0 | 68.7 | --- |

In practice, the interleaf material can be used to form a variety of different parts. For example, cover structures for airplane parts may be formed of fiber resin matrix-interleaf sheets stacked and cured to form 2.54 mm to 0.63 mm (0.10-inch to 0.25-inch) thin structural parts. Structural members such as wing panels will be much thicker.

Fiber resin matrix-interleaf sheets according to this invention range in thickness from 0.012 to 0.254 mm (0.0005 to 0.010 inch), thus, for example, a stack of twenty-five to fifty fiber resin matrix-interleaf sheets will form a ¼-inch thick part. The fiber resin matrix-interleaf sheets are typically stacked with the direction of the fibers oriented in different directions, depending on the stress requirements of the part. For example, the maximum number of fiber resin matrix-interleaf sheets may be oriented in the 0° direction, i.e., the direction in which the maximum tension or compression forces will be imposed, and the remainder of the fiber resin matrix-interleaf sheets are oriented at 90° and plus or minus 45° from the 0° orientation.

The relative thickness of the layers of the fiber resin matrix-interleaf resin sheet is also important. Preferably the interleaf layer will be in the range of about 0.01 to 0.051 mm (.0004 in. to .002 in), and the fiber resin matrix layer will be in the range of about 0.177 mm to 0.228 mm (.007 in. to .009 in).

EXAMPLE 2

A fiber resin was prepared using the following matrix resin formulation:

| | parts by weight |
|---|---|
| tetra (4,4')N-glycidyl methylene dioniline (Ciba Geigy Araldite® MY-720) | 100 |
| trimethylene glycol di-para-aminobenzoate (Polaroid Polacure® 740 M) | 48.4 |
| PKHH phenoxy resin based on epichlorohydrin and bis phenol A (Union Carbide Corporation) | 10 |
| boron trifluoride - monoethyl amine ($BF_3$.MEA) | 0.5 |

Composites were formed by applying an extruded polyether polyimide (ULTEM®) layer 0.025 mm (0.001 inch) thick. Laminates were formed, cured and tested as in Example 1, and the following data were obtained:

| Temperature (°C) | Compression Strength QUASI-COMP (KSI) |
|---|---|
| 23° | 89 |
| 93° | -- |
| 132° | 88±4 |
| 177° | 62 |

The laminates also exhibited a Critical Strain Energy Release Rate, $G_{Ic}$, of 3.15 cm·0.454 kg/2.54 cm² (in-lbs/sq in); and Short Beam Shear Strength (unidirectional) of 13.1±0.4 KSI. A similar laminate showed a short beam shear strength (Quasi-isotropic) of 12.2 KSI.

EXAMPLE 3

A fiber resin matrix was prepared using CYCOM® 1806 (American Cyanamid Company) as the matrix resin.

Composites were prepared having a 0.025 mm (0.001-inch) interleaf layer of the same polyether polyimide resin used in Example 2. Laminates were formed, cured and tested as in Example 2, and the following data were obtained: $G_{Ic}$, 2.0 cm·0.454 kg/2.54 $cm^2$ (in-lbs/sq in); edged delamination strain, 0.77%; and Short Beam Shear Strength (Unidirectional) of 13.0±1.1 KSI. Microscopic examination showed good bonding of the interleaf to the matrix resin with no interfacial failure.

EXAMPLE 4

A matrix resin having the following composition was prepared:

| | parts by weight |
|---|---|
| tetra (4,4')N-glycidyl methylene dianiline (Ciba Geigy Araldite® MY-720) | 100 |
| ULTEM® polyether polyimide resin (General Electric Company) | 10 |
| trimethylene glycol di-para-aminobenzoate (Polaroid Polacure® 740M) | 46 |

Composites were prepared having a 0.025 mm (0.001-inch) interleaf layer of the same polyether polyimide used in Example 2. Laminates prepared from the composites exhibited a Compression Strength After Impact of 48.0±3 KSI.

EXAMPLE 5

A fiber resin matrix was prepared using CYCOM® 1808 (American Cyanamid Company) as the matrix resin.

Composites were prepared having a 0.051 mm (0.002-inch) interleaf layer of a polyether-ether ketone (PEEK) which had been degreased with methylene chloride to remove any surface soil or lubricant therefrom. Laminates exhibited a $G_{Ic}$ of 1.23 cm·0.454 kg/2.54 $cm^2$ (in-lbs/sq in). Microscopic examination showed good bonding of the interleaf to the matrix resin with no interfacial failure.

EXAMPLE 6

Composites formed using the matrix resin of Example 5 and having a 0.012 mm (0.0005-inch) interleaf layer of polyamide (KAPTON®) washed with methylene chloride were prepared. Laminates formed from the composites had a $G_{Ic}$ of 2.05 cm·0.454 kg/2.54 $cm^2$ (in-lbs/sq in). Microscopic examination showed good bonding of the interleaf to the matrix resin with no interfacial failure.

EXAMPLE 7

Composites were prepared as in the previous examples having a bis(maleimide) matrix resin and a 0.025 mm (0.001-inch) interleaf layer of polyether polyimide (Example 2). Laminates formed from the composites had a $G_{Ic}$ of 1.38 cm·0.454 kg/2.54 $cm^2$ (in-lbs/sq in). Microscopic examination showed good bonding of the interleaf to the matrix resin with no interfacial failure.

EXAMPLE 8

Composites identical to those of Example 7, except that the interleaf layer was 0.012 mm (0.0005 inch) thick were prepared. Laminates prepared from the composites showed a $G_{Ic}$ of 1.43 cm·0.454 kg/2.54 $cm^2$ (in-lbs/sq in); an edged delamination strain of 0.48%; and Compression Strength After Impact of 31.4 KSI.

EXAMPLE 9

Fabric resin matrix composites formed by impregnating a woven graphite fiber fabric with the resin of Example 5 and applying a 0.025 mm (0.001-inch) interleaf layer of a polyether polyimide (ULTEM®) were prepared. Laminates prepared from the composites showed a $G_{Ic}$ of 1.36 cm·0.454 kg/2.54 $cm^2$ (in-lbs/sq in). Similar composites having a light weight non-woven polyester scrim placed between the interleaf and fiber resin matrix layers (in order to improve

the fracture toughness of the composite) were prepared and formed into laminates which exhibited a $G_{Ic}$ of 3.02 cm·0.454 kg/2.54 cm² (in-lbs/sq in).

EXAMPLES 10-15

The matrix resin denoted hereinbelow in Table I as Resin A had the following composition:

| | parts by weight |
|---|---|
| tetra (4,4')N-glycidyl methylene dianiline (Ciba Geigy Araldite® MY-720) | 100 |
| diamino diphenyl sulfone | 38 |
| ULTEM® polyether polyimide resin (General Electric Company) | 10 |
| reaction product of phenyl isocyanate and N,N' - diethyl - 1,3 - diamino propane | 1.4 |

Six additional fiber resin matrix composites were prepared to further illustrate the advantage of the present invention. All composites employed CELION® 6K graphite filaments and had a matrix resin content of approximately 34%. The matrix resin and interleaf resin combinations were as follows:

TABLE I

| Sample | Matrix Resin | Interleaf |
|---|---|---|
| 10 | [CYCOM® 985]* | -- |
| 11 | [Same as Example 1] | -- |
| 12 | [Same as Example 1] | Modified epoxy** |
| 13 | [Same as Example 1] | ULTEM® |
| 14 | Resin A | -- |
| 15 | Resin A | ULTEM® |

* A commercial fiber resin matrix material, sold by American Cyanamid Company.

** A thermoset epoxy resin modified with a carboxylic-functional butadiene-acrylonitrile copolymer.

The composites were formed into laminates and subjected to UNI-COMP, QUASI-COMP and COMP/IMPACT tests, as described above, with the results shown in Table II below.

TABLE II

| Sample | 10 | 11 | 12 | 13 | 14 | 15 |
|---|---|---|---|---|---|---|
| UNI-COMP(KSI) | | | | | | |
| RT | 235 | 205 | 146 | 181 | 223 | 173 |
| 93°C (200°F) | 235 | 205 | 129 | 164 | 197 | 166 |
| 132°C (270°F) | -- | 200 | -- | 130 | 208 | 163 |
| 93°C (200°F) Wet | 168 | 125 | 90 | 147 | 143 | 158 |
| 132°C (270°F) Wet | -- | 52 | -- | 46 | 102 | 107 |
| QUASI-COMP (KSI) | | | | | | |
| RT | 104 | 97 | 88 | 97 | 101 | 96 |
| 93°C (200°F) | 103 | 96 | 75 | 84 | 102 | 80 |
| 132°C (270°F) | -- | 100 | -- | 69 | 100 | 72 |
| 93°C (200°F) Wet | 77 | 66 | 63 | 71 | 86 | 76 |
| 93°C (200°F) Wet | -- | 36 | -- | 38 | 68 | 60 |
| COMP/IMPACT (1500 cm·4.45/cm) (1500 in-lbs/in) | | | | | | |
| | 28.3 | 31.7 | 43.4 | 51.0 | 32.3 | 49.3 |

Considering the foregoing data in detail, it is seen that Sample 12, comprising a modified epoxy interleaf exhibits a 137% improvement in impact resistance (compressive strength after impact) relative to Sample 11 containing no interleaf (Sample 12 = 43.4; Sample 11 = 31.7), with both Samples 11 and 12 affording improvement over the conventional fiber resin matrix composites of Sample 10. The improvement in impact resistance achieved by sample 12 over Sample 11, however, is realized at a sacrifice in elevated temperature compressive strength and compressive strength under high humidity conditions, especially with regard to uniaxial compressive strength (see, for example, at 93°C (200°F) wet conditions, the compressive strength of Sample 12 is 90 KSI, while the corresponding value for Sample 11 is 125 KSI).

Sample 13, illustrative of the present invention, shows an improvement in compressive stength after impact of 161%, with little change in compressive strength at either 93°C (200°F) or 132°C (270°F), dry or wet, compared to the unmodified laminate of Sample 11.

Samples 14 and 15 show the effect of using a thermoplastic interleaf in a high stiffness formulation designed to provide superior strength at a 132°C (270°F), wet condition. The utilization of the interleaf (Sample 15) does not significantly change either uniaxial or quasi-isotropic compressive strength (within the experimental error of the test) relative to the unmodified laminate (Sample 14), yet improves the compression strength after impact from 32.3 to 49.3, an improvement of 153%.

EXAMPLES 16-21

Samples 16-21 were prepared with the same matrix resin as Example 1 and in accordance with the procedure of Example 1 except for the interleaf, which was varied as follows:

Sample 16: no interleaf
Sample 17: same as Example 12 (thermoset epoxy modified with butadiene-acrylonitrile copolymer)
Sample 18: same as Example 13 (wholly thermoplastic)

Sample 19: interleaf formulation -

| | parts by weight |
|---|---|
| ULTEM® polyether polyimide (General Electric Company) | 300 |
| Dow Dev 331 (Dow Chemical Company), a diglycidyl ether of bis phenol A | 80 |
| diamine diphenyl sulfone | 16 |
| dicyandiamide | 4 |

Sample 20: interleaf formulation -

| | parts by weight |
|---|---|
| ULTEM® | 300 |
| Modified epoxy of Example 12 | 100 |

Sample 21: interleaf formulation

| | parts by weight |
|---|---|
| ULTEM® | 300 |
| ERL-0500 (Ciba Geigy), trifunctional epoxy resin | 70 |
| diaminodiphenyl sulfone | 30 |

The interleafs of Sample 18-21 were cast on 0.024 kg/m$^2$ (0.005 lbs/ft$^2$) films from methylene chloride solution. All interleaf layers were dried for 1 hour at 93°C (200°F) prior to being formed into composites. The resulting composites were then each laid up in the form of 16-ply laminates with a quasi-isotropic sequence, and then tested by ASTM D2344, Short Beam Shear Test, with the results (quasi-SBS) as shown in Table III below.

TABLE III

| Quasi-SBS Data for Testing of Samples 16-21 by ASTM D2344 | | | | | | |
|---|---|---|---|---|---|---|
| Sample | 16 | 17 | 18 | 19 | 20 | 21 |
| 93°C (200°F), Dry (control) | 9.4 | 9.6 | 10.2 | 11.0 | 11.5 | 11.5 |
| 93°C (200°F), 5 weeks Wet | 5.7 | 5.9 | 6.0 | 6.7 | 7.0 | 6.7 |
| 93°C (200°F), 5 weeks in Methylene Chloride | 7.2 | 4.9 | delaminated | 7.6 | 3.1 | 2.3 |

The above data of Table III show that the solvent resistance (to methylene chloride) of the thermoplastic interleaf-containing composite (Sample 18) is markedly enhanced by combining the thermoplastic resin (ULTEM®) with 25% by weight of a thermosetting resin (including curative) as in Sample 19-21. The unmodified thermoplastic interleaf laminate totally delaminated after one week in methylene chloride, while the thermoplastic/thermoset interleaf materials (Samples 19-21) retained 20% to 70% or their 93°C (200°F), dry short beam strength values after 5 weeks exposure and 34% to 100% of their corresponding 93°C (200°F), 5 weeks wet SBS values.

Many variations of the invention will suggest themselves to those skilled in this art in light of the above detailed description, and all such variations are within the full intended scope of this invention. For example, other filaments, such

as carbon, silicon carbide, boron, aramid, polyester, polyamide, and rayon, or metal-coated, such as nickel- and/or silver-coated such filaments and fibers, alone or in any combination, can be used.

Matrix resin formulations also can be varied in weight ratio widely, depending on the precise properties desired and the intended use. By way of illustration, a preferred matrix resin according to this invention may have the following components, in the following proportions, by weight:

| Ingredients | parts by weight | |
|---|---|---|
| | Preferred | Most Preferred |
| (i) tetra (4,4') N-glycidyl dianiline | 50-100 | 75-85 |
| (ii) tetraglycidoxy tetraphenylethane | 0-50 | 15-25 |
| (iii) trimethylene glycol di-para-aminobenzoate | 28-60 | 35-45 |
| (iv) fumed silica | 0-12 | 5-7 |
| (v) reaction product of toluene diisocyanate and dimethylamine | 0.1-2.5 | 0.1-2.5 |

All such obvious variations are within the full intended scope of the invention as defined by the appended claims.

**Claims**

1. An interleafed fiber resin matrix composite, which comprises:

(A) a fiber resin matrix layer, comprising

(i) high-strength reinforcing filaments and
(ii) a thermosetting resin composition including curing agent(s) and coating said filaments, and

(B) a discrete interleaf resin layer,

characterized by

(B) a discrete interleaf resin layer comprising:

(i) a thermoplastic resin, optionally blended with up to 40 % by weight of a thermosetting resin, based on the weight of the blend, adhesively-bondable to said fiber resin matrix layer;

wherein said thermosetting resin composition (A) (ii), when cured, exhibits a shear modulus of at least 6203 $N/mm^2$ at 82-204°C or at least 3445 $N/mm^2$ if immersed in water at 71°C for 14 days; and said interleaf resin (B), as a solid, exhibits a shear modulus of at least 3445 $N/mm^2$ and a yield strength of at least 207 $N/mm^2$ at 82 to 204°C and a strain to failure of at least 6 % at -55°C and at least 15 % at room temperature.

2. The interleafed fiber resin matrix composite according to Claim 1, characterized in that

(A) the fiber resin matrix layer comprises

(i) 60%-70% by weight high-strength reinforcing filaments selected from the group consisting of carbon fibers, graphit fibers, nickel-coated such fibers silver-coated such fibers, nickel-and-silver-coated such fibers, and combinations thereof, and
(ii) 30 %-40 % by weight of a thermosetting epoxy resin composition coating said filaments, said epoxy resin composition comprising: (a) a polyepoxide compound or combination of compounds, (b) a curing agent effective to catalyze polymerization of said polyepoxide compound , and (c) a filler.

and that said epoxy resin composition (A) (ii), when cured, exhibits a shear modulus of at least 3445 $N/mm^2$ if immersed in water at 71°C, while said interleaf resin (B), as a solid, exhibits a shear strain to failure of at least 6 % at -55°C at least 15 % at room temperature, and at least 25 % at 82 to 204°C.

**3.** An interleafed fiber resin matrix composite according to one of claims 1 or 2, characterized in that said epoxy resin composition of

A (ii) comprises (a) 50-100 parts by weight of tetra(4,4')N-glycidyl methylene dianiline, (b) 0-50 parts by weight tetra-glycidoxy tetraphenylethane, (c) 28-60 parts by weight trimethylene glycol di-para-aminobenzoate, (d) 0-12 parts by weight fumed silica, and (e) 0.1-2.5 parts by weight of the reaction product of toluene diisocyanate and dimethylamine; and that
(B) the discrete interleaf resin layer comprises a thermoplastic polyether polyimide.

**4.** An interleafed fiber resin matrix composite according to Claim 1, characterized in that

(A) the fiber resin matrix layer comprises

(i) 60 - 70 % by weight high-strength reinforcing filaments; and
(ii) 30 - 40 % by weight of a thermosetting resin composition coating said filaments,

and that said thermosetting resin composition (A) (ii), when cured, and subjected to shear forces at 93°C , has an ultimate stress of at least 345 $N/mm^2$ while said interleaf resin (B), as a solid, when subjected to shear at 93°C has a yield stress of at least 275 $N/mm^2$ and an ultimate stress of at least 345 $N/mm^2$.

**5.** An interleafed fiber resin matrix composite, as defined in Claim 1, wherein the thermosetting resin composition (A) (ii) is comprised of bismaleimide compounds selected from the group consisting of:

(i) 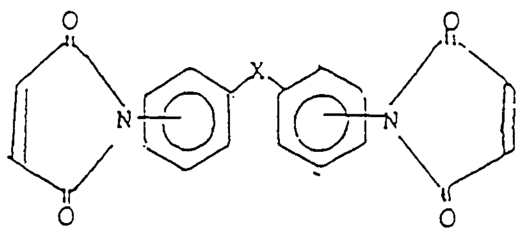 ,

wherein the isomeric species are meta, meta; meta, para or para, para

and X = $-CH_2-$,-O-,-S-, or

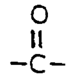 ;

(ii)

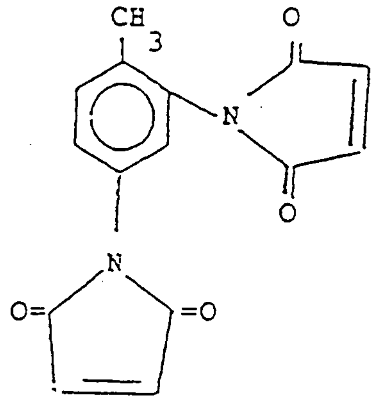 ;

(iii)

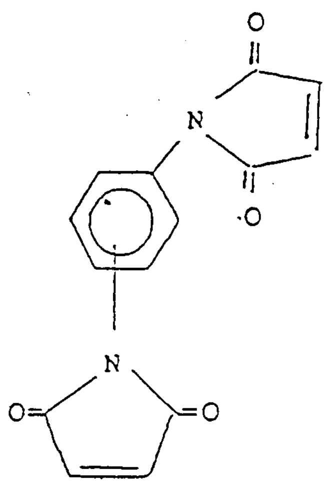 meta or para ;

(iv)

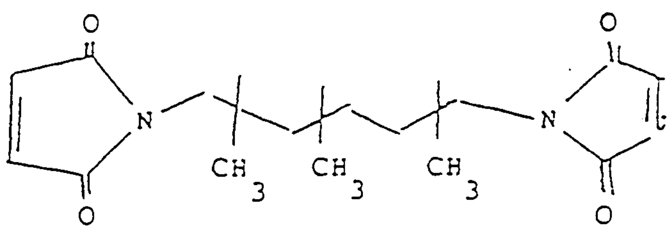 and

(v)

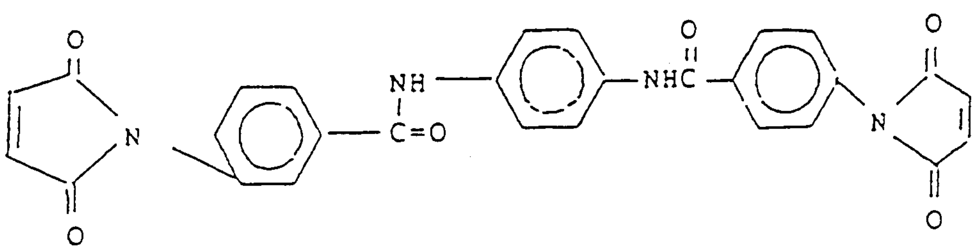

6. An interleafed fiber resin matrix composite, as defined in Claim 1, wherein the thermosetting resin composition (A)(ii) is comprised of acetylene-terminated resins selected from the group consisting of:

(i) 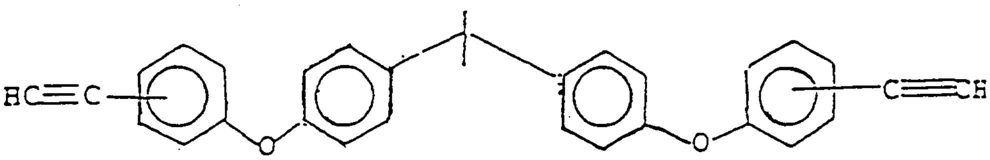 ;

(ii) 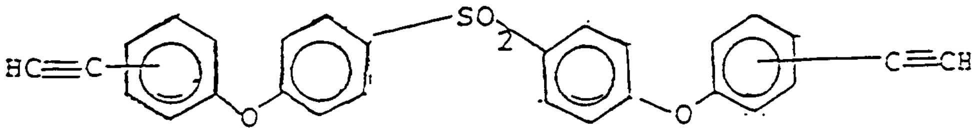 ;

(iii) 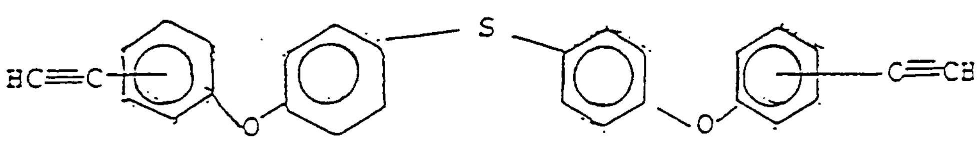 ; and

(iv) 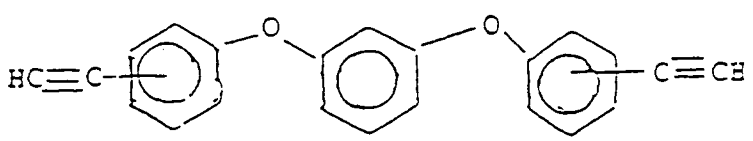 ;

wherein the - C≡CH substituents each independently may be <u>meta</u>- or <u>para</u> - positioned.

7. An interleafed fiber resin matrix composite, as defined in Claim 1, wherein said reinforcing filaments are selected from the group consisting of glass, carbon, graphite, silicon carbide, boron, aramid, polyester, polyamide, rayon, polybenzimidazole, and polybenzothiazole filaments, and metal-coated such filaments.

8. An interleafed fiber resin matrix composite, as defined in Claim 1, wherein a bonded interface is formed between layer (A) and layer (B).

9. An interleafed fiber resin matrix composite as in Claim 1, wherein the thermosetting resin composition (A) (ii) is comprised of epoxy compounds selected from the group consisting of polyglycidyl ethers of polyfunctional phenols, polyglycidyl ethers of the chlorination or bromination products of polyvalent phenols, polyglycidyl ethers of novolacs, polyepoxy compounds derived from aromatic amines and epichlorohydrin, and mixtures thereof.

10. An interleafed fiber resin matrix composite as defined in Claim 9, wherein said thermosetting resin composition (A) (ii), when cured, and said interleaf resin (B), as solid, both exhibit an ultimate shear stress above 207 $N/mm^2$.

11. An interleafed fiber resin matrix composite, as defined in Claim 10, wherein said curing agents are diamines.

12. An interleafed fiber resin matrix composite, as defined in Claim 11, wherein said diamines are selected from the group consisting of diaminodiphenyl sulphone, diaminodiphenyl methane, and phenylenediamine.

13. An interleafed fiber resin matrix composite, as defined in Claim 10, wherein the interleaf resin is selected from the group consisting of polyester, polyamide, polyaramid, polyarylate, polycarbonate, poly(estercarbonate), polybenzimidazole, polyimide, polyether imide, polyamide imide, polyether ether ketone, and mixtures of any of the foregoing.

**14.** An interleafed fiber resin matrix composite, as defined in Claim 13, wherein the interleaf resin is a polyether imide resin.

**15.** An interleafed fiber resin matrix composite, as defined in Claim 1, wherein said reinforcing filaments comprise 60-70% by weight of the fiber resin matrix and said thermosetting resin composition (A) (ii) comprises 30%-40% by weight of the fiber resin matrix.

**16.** An interleafed fiber resin matrix composite, as defined in Claim 1, wherein said fiber resin matrix layer (A) has a thickness of 0.178 - 0.228 mm and said interleaf resin layer (B) has a thickness of 0.010 - 0.051 mm.

**17.** An interleafed fiber resin matrix composite, as defined in Claim 1, wherein said thermosetting resin composition comprises a resin selected from the group consisting of thermosetting epoxy, polyimide, bis maleimide and acetylene-terminated resins.

**18.** An interleafed fiber resin matrix composite, as defined in Claim 1, wherein said thermoplastic resin (B) (i) contains a reinforcing material.

**Patentansprüche**

**1.** Faserharzmatrixverbundstoff mit Zwischenlage mit:

(A) einer Faserharzmatrixschicht mit

(i) hochfesten Verstärkungsfilamenten und
(ii) einer Zusammensetzung wärmehärtbaren Harzes, die ein oder mehrere Härtungsmittel aufweist und die Filamente beschichtet, und

(B) einer separaten Zwischenlagenharzschicht,

gekennzeichnet durch

(B) eine separate Zwischenlagenharzschicht mit:

(i) einem thermoplastischen Harz, wahlweise bezogen auf das Gewicht der Mischung mit bis zu 40 Gew.% eines wärmehärtbaren Harzes vermischt, das durch Haften an die Faserharzmatrixschicht bindbar ist;

wobei die Zusammensetzung (A) (ii) wärmehärtbaren Harzes, falls gehärtet, einen Schermodul von mindestens 6203 $N/mm^2$ bei 82 - 204°C oder mindestens 3445 $N/mm^2$ bei Eintauchen in Wasser bei 71°C über 14 Tage aufweist; und das Zwischenlagenharz (B) als Feststoff einen Schermodul von mindestens 3445 $N/mm^2$ und eine konventionelle Streckgrenze von mindestens 207 $N/mm^2$ bei 82 bis 204°C und eine Bruchdehnung von mindestens 6 % bei -55°C und mindestens 15 % bei Raumtemperatur aufweist.

**2.** Faserharzmatrixverbundstoff mit Zwischenlage gemäß Anspruch 1, dadurch gekennzeichnet, daß

(A) die Faserharzmatrixschicht folgendes aufweist:

(i) 60 - 70 Gew.% hochfeste Verstärkungsfilamente ausgewählt aus der Gruppe bestehend aus Kohlenstoffasern, Graphitfasern, derartigen nickelbeschichteten Fasern, derartigen silberbeschichteten Fasern, derartigen nickel- und silberbeschichteten Fasern sowie Kombinationen davon, und
(ii) 30 - 40 Gew.% einer Zusammensetzung wärmehärtbaren Epoxidharzes, die die Filamente beschichtet, wobei die Epoxidharzzusammensetzung folgendes aufweist: (a) eine Polyepoxidverbindung oder eine Kombination aus Polyepoxidverbindungen, (b) ein Härtungsmittel, das beim Katalysieren der Polymerisation der Polyepoxidverbindung wirksam ist, und (c) einen Füllstoff.

und daß die Epoxidharzzusammensetzung (A) (ii), falls gehärtet, einen Schermodul von mindestens 3445 $N/mm^2$ bei Eintauchen in Wasser bei 71°C aufweist, während das Zwischenlagenharz (B) als Feststoff eine Bruchscherverformung von mindestens 6 % bei -55°C, mindestens 15 % bei Raumtemperatur und mindestens 25 % bei 82 bis 204°C aufweist.

3. Faserharzmatrixverbundstoff mit Zwischenlage gemäß einem der Ansprüche 1 oder 2, dadurch gekennzeichnet, daß die Epoxidharzzusammensetzung von

A (ii) (a) 50 - 100 Gewichtsteile Tetra(4,4')N-glycidylmethylendianilin, (b) 0 - 50 Gewichtsteile Tetraglycidoxytetraphenylethan, (c) 28 - 60 Gewichtsteile Trimethylenglycol-di-para-aminobenzoat, (d) 0 - 12 Gewichtsteile Quarzstaub und (e) 0,1 - 2,5 Gewichtsteile des Reaktionsprodukts aus Toluoldiisocyanat und Dimethylamin enthält; und daß

(B) die separate Zwischenlagenharzschicht ein thermoplastisches Polyetherpolyimid enthält.

4. Faserharzmatrixverbundstoff mit Zwischenlage gemäß Anspruch 1, dadurch gekennzeichnet, daß

(A) die Faserharzmatrixschicht folgendes enthält:

(i) 60 - 70 Gew.% hochfeste Verstärkungsfasern; und
(ii) 30 - 40 Gew.% einer Zusammmensetzung wärmehärtbaren Harzes, welche die Filamente beschichtet,

und daß die Zusammensetzung (A) (ii) des wärmehärtbaren Harzes, falls gehärtet und Scherkräften bei 93°C ausgesetzt, eine Bruchspannung von mindestens 345 N/mm$^2$ aufweist, während das Zwischenlagenharz (B) als Feststoff, falls einer Scherbeanspruchung bei 93°C ausgesetzt, eine Fließspannung von mindestens 275 N/mm$^2$ und eine Bruchspannung von mindestens 345 N/mm$^2$ aufweist.

5. Faserharzmatrixverbundstoff mit Zwischenlage gemäß Anspruch 1, bei dem die Zusammensetzung (A) (ii) wärmehärtbaren Harzes Bismaleimidverbindungen enthält, ausgewählt aus der Gruppe bestehend aus:

(i) 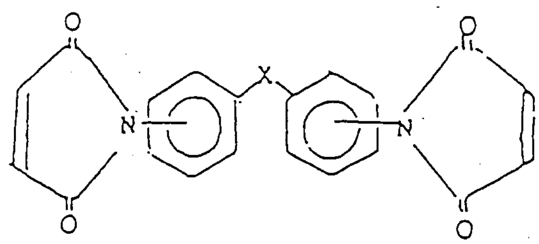 ,

wobei die isomeren Arten <u>meta, meta</u>; <u>meta, para</u> oder <u>para, para</u> sind

und X = $-CH_2-$,-O-,-S-, oder

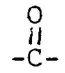 ;

(ii)

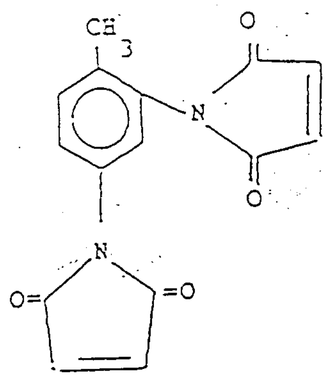

(iii)

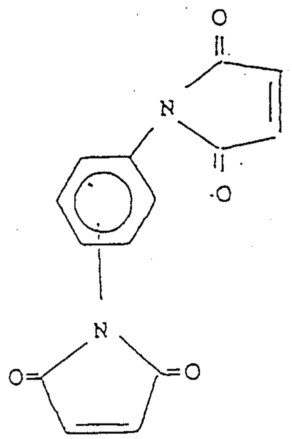

meta oder para ;

(iv)

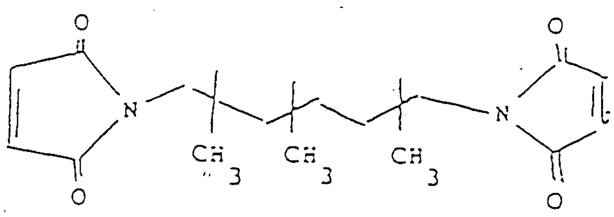

und

(v)

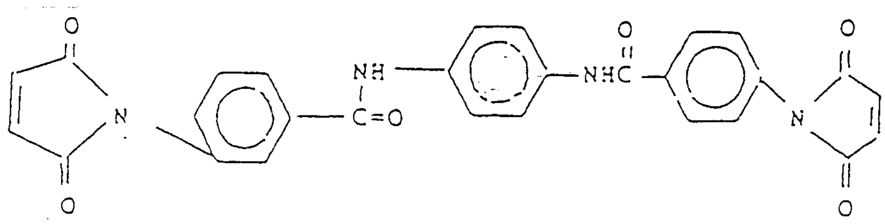

6. Faserharzmatrixverbundstoff mit Zwischenlage gemäß Anspruch 1, bei dem die Zusammensetzung (A) (ii) wärmehärtbaren Harzes mit Acetylen endende Harze enthält, ausgewählt aus der Gruppe bestehend aus:

(i) 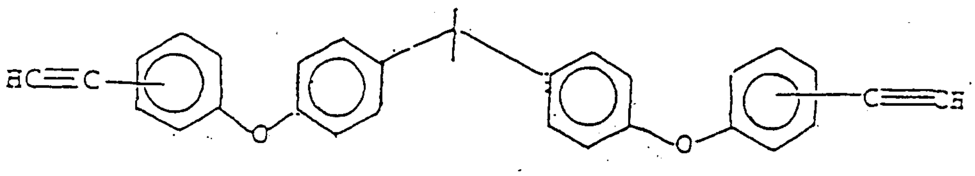 ;

(ii) 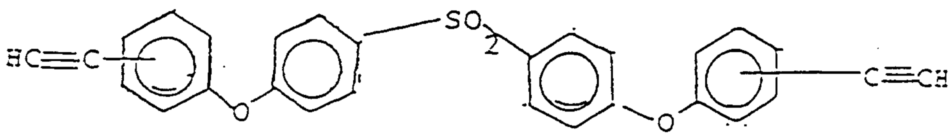 ;

(iii) 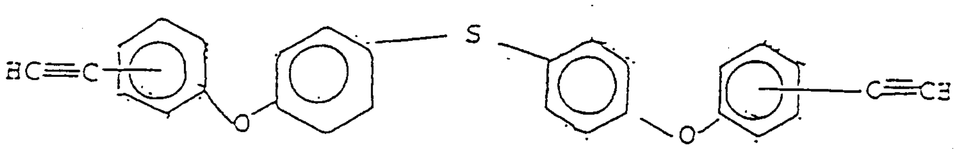 ; und

(iv) 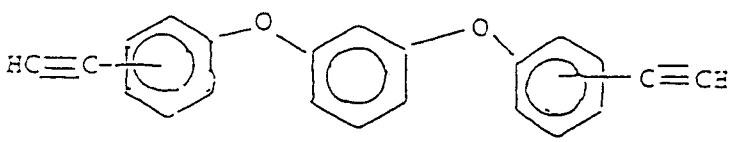 ;

wobei die - C≡CH-Substituenten jeweils unabhängig in Meta- oder Para-Stellung sein können.

7. Faserharzmatrixverbundstoff mit Zwischenlage gemäß Anspruch 1, bei dem die Verstärkungsfilamente aus der Gruppe bestehend aus Glas-, Kohlenstoff-, Graphit-, Siliciumcarbid-, Bor-, Aramid-, Polyester-, Polyamid-, Reyon-, Polybenzimidazol- und Polybenzothiazolfilamenten sowie derartigen metallbeschichteten Filamenten ausgewählt sind.

8. Faserharzmatrixverbundstoff mit Zwischenlage gemäß Anspruch 1, bei dem zwischen der Schicht (A) und der Schicht (B) eine gebundene Grenzfläche ausgebildet ist.

9. Faserharzmatrixverbundstoff mit Zwischenlage gemäß Anspruch 1, bei dem die Zusammensetzung (A) (ii) wärmehärtbaren Harzes Epoxidverbindungen ausgewählt aus der Gruppe bestehend aus Polyglycidylethern von polyfunktionellen Phenolen, Polyglycidylethern von den Chlorierungs- oder Bromierungsprodukten von polyvalenten Phenolen, Polyglycidylethern von Novolaken, Polyepoxidverbindungen aus aromatischen Aminen und Epichlorhydrin und Mischungen davon enthält.

10. Faserharzmatrixverbundstoff mit Zwischenlage gemäß Anspruch 9, bei dem sowohl die Zusammensetzung (A) (ii) wärmehärtbaren Harzes, falls gehärtet, als auch das Zwischenlagenharz (B), als Feststoff, eine Bruchscherspannung über 207 $N/mm^2$ aufweisen.

11. Faserharzmatrixverbundstoff mit Zwischenlage gemäß Anspruch 10, bei dem es sich bei den Härtungsmitteln um Diamine handelt.

12. Faserharzmatrixverbundstoff mit Zwischenlage gemäß Anspruch 11, bei dem die Diamine aus der Gruppe bestehend aus 4,4'-Diaminodiphenylsulfon, Diaminodiphenylmethan und Phenylendiamin ausgewählt sind.

13. Faserharzmatrixverbundstoff mit Zwischenlage gemäß Anspruch 10, bei dem das Zwischenlagenharz aus der Gruppe bestehend aus Polyester, Polyamid, Polyaramid, Polyacrylat, Polycarbonat, Poly(estercarbonat), Polybenzimidazol, Polyimid, Polyetherimid, Polyamidimid, Polyetheretherketon und Mischungen aus einem der vorhergehenden ausgewählt ist.

14. Faserharzmatrixverbundstoff mit Zwischenlage gemäß Anspruch 13, bei dem es sich bei dem Zwischenlagenharz um ein Polyetherimidharz handelt.

15. Faserharzmatrixverbundstoff mit Zwischenlage gemäß Anspruch 1, bei dem die Verstärkungsfilamente 60 - 70 Gew.% der Faserharzmatrix umfassen und die Zusammensetzung (A) (ii) wärmehärtbaren Harzes 30 - 40 Gew.% der Faserharzmatrix umfaßt.

16. Faserharzmatrixverbundstoff mit Zwischenlage gemäß Anspruch 1, bei dem die Faserharzmatrixschicht (A) eine Dicke von 0,178 - 0,228 mm und die Zwischenlagenharzschicht (B) eine Dicke von 0,010 - 0,051 mm aufweist.

17. Faserharzmatrixverbundstoff mit Zwischenlage gemäß Anspruch 1, bei dem die Zusammensetzung wärmehärtbaren Harzes ein Harz ausgewählt aus der Gruppe bestehend aus wärmehärtbaren Epoxidharzen, Polyimidharzen, Bismaleimidharzen und mit Acetylen endenden Harzen enthält.

18. Faserharzmatrixverbundstoff mit Zwischenlage gemäß Anspruch 1, bei dem das thermoplastische Harz (B) (i) ein Verstärkungsmaterial enthält.

**Revendications**

1. Composite intercalé à matrice de fibres-résine qui comprend :

    (A) une couche de matrice de fibres-résine comprenant

        (i) des filaments de renfort à haute résistance et
        (ii) une composition de résine thermodurcissable comprenant un ou plusieurs agents de durcissement et revêtant lesdits
        filaments,

    et
    (B) une couche de résine intercalaire distincte,

caractérisé par

    (B) une couche de résine intercalaire distincte comprenant :

        (i) une résine thermoplastique éventuellement mélangée avec jusqu'à 40 % en poids d'une résine thermodurcissable, relativement au poids du mélange, pouvant être unie par adhésion à ladite couche de matrice de fibres-résine ;

où ladite composition de résine thermodurcissable (A)(ii), lorsqu'elle est durcie, présente un module de cisaillement d'au moins 6 203 $N/mm^2$ à 82-204°C ou d'au moins 3 445 $N/mm^2$ lorsqu'elle est plongée dans l'eau à 71°C pendant 14 jours ; et ladite résine intercalaire (B), en tant que solide, présente un module de cisaillement d'au moins 3 445 $N/mm^2$ et une limite élastique d'au moins 207 $N/mm^2$ entre 82 et 204°C et une déformation à la rupture d'au moins 6 % à -55°C et d'au moins 15 % à la température ambiante.

2. Composite intercalé à matrice de fibres-résine selon la revendication 1, caractérisé en ce que

    (A) la couche de matrice de fibres-résine comprend

        (i) 60 % à 70 % en poids de filaments de renfort à haute résistance choisis dans le groupe constitué par les fibres de carbone, les fibres de graphite, de telles fibres revêtues de nickel, de telles fibres revêtues d'argent, de telles fibres revêtues de nickel et d'argent, et leurs combinaisons, et
        (ii) 30 % à 40 % en poids d'une composition de résine époxyde thermodurcissable revêtant lesdits filaments, ladite composition de résine époxyde comprenant : (a) un composé ou une combinaison de composés

polyépoxydes, (b) un agent de durcissement efficace pour catalyser la polymérisation dudit composé polyépoxyde et (c) une charge,

et en ce que ladite composition de résine époxyde (A)(ii), lorsqu'elle est durcie, présente un module de cisaillement d'au moins 3 445 N/mm² lorsqu'elle est plongée dans l'eau à 71°C, tandis que ladite résine intercalaire (B), en tant que solide, présente une déformation par cisaillement à la rupture d'au moins 6 % à -55°C, d'au moins 15 % à la température ambiante et d'au moins 25 % entre 82 et 204°C.

**3.** Composite intercalé à matrice de fibres-résine selon l'une des revendications 1 ou 2, caractérisé en ce que ladite composition de résine époxyde de

(A)(ii) comprend (a) 50 à 100 parties en poids de tétra(4,4')N-glycidylméthylènedianiline, (b) 0-50 parties en poids de tétra-glycidoxytétraphényléthane, (c) 28 à 60 parties en poids de di-para-aminobenzoate de triméthylèneglycol, (d) 0 à 12 parties en poids de silice pyrogénée et (e) 0,1 à 2,5 parties en poids du produit de la réaction du toluène diisocyanate et de la diméthylamine ; et en ce que
(B) la couche de résine intercalaire distincte comprend un polyéther-polyimide thermoplastique.

**4.** Composite intercalé à matrice de fibres-résine caractérisé en ce que

(A) la couche de matrice de fibres-résine comprend

(i) 60 à 70 % en poids de filaments de renfort à haute résistance ; et
(ii) 30 à 40 % en poids d'une composition de résine thermodurcissable revêtant lesdits filaments,

et en ce que ladite composition de résine thermodurcissable (A)(ii), lorsqu'elle est durcie et soumise à des forces de cisaillement à 93°C, a une contrainte à la rupture d'au moins 345 N/mm², tandis que ladite résine intercalaire (B), en tant que solide, lorsqu'elle est soumise à un cisaillement à 93°C, a une limite élastique d'au moins 275 N/mm² et une contrainte à la rupture d'au moins 345 N/mm².

**5.** Composite intercalé à matrice de fibres-résine, tel que défini dans la revendication 1, où la composition de résine thermodurcissable (A)(ii) comprend des bismaléimides choisis dans le groupe constitué par :

(i)

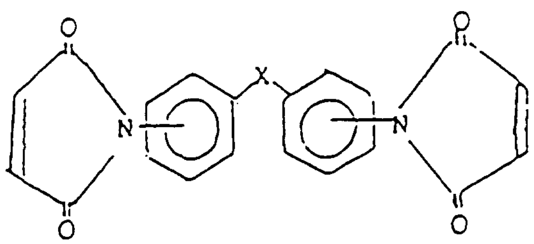

,

où les espèces isomères sont <u>méta, méta</u> ; <u>méta, para</u> : ou <u>para, para</u>

et X = $-CH_2-$, -O-, -S- ou

$$-\overset{\overset{\displaystyle O}{\|}}{C}- \;;$$

(ii)

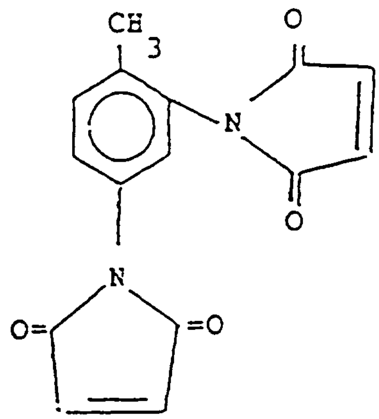

;

(iii)

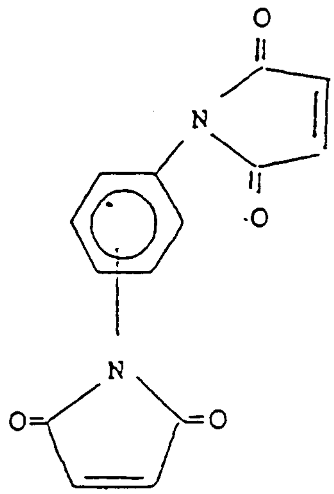

méta ou para ;

(iv)

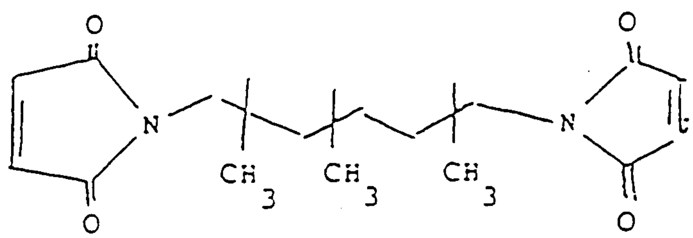

et

(v)

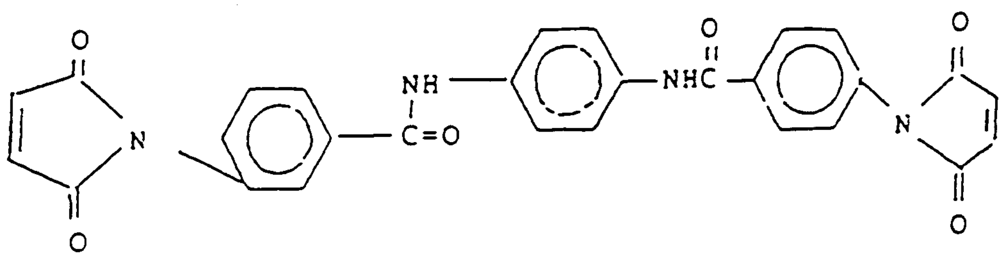

6. Composite intercalé à matrice de fibres-résine, tel que défini dans la revendication 1, où la composition de résine thermodurcissable (A)(ii) comprend des résines à terminaison acétylène choisies dans le groupe constitué par :

(i)

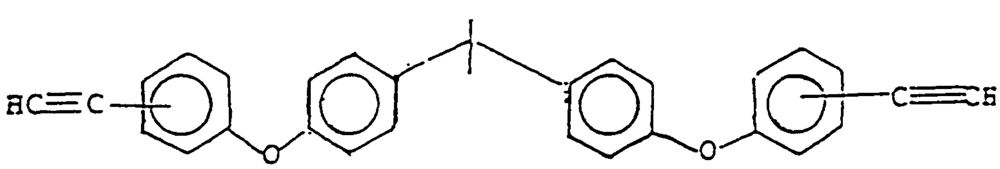

;

(ii)

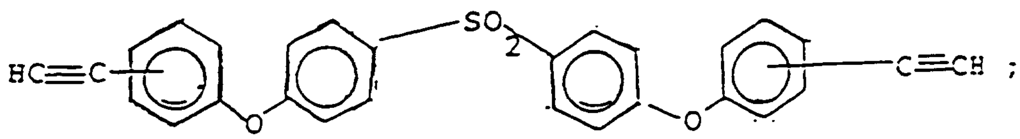

(iii)

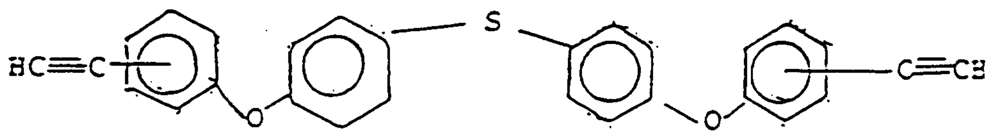

et

(iv)

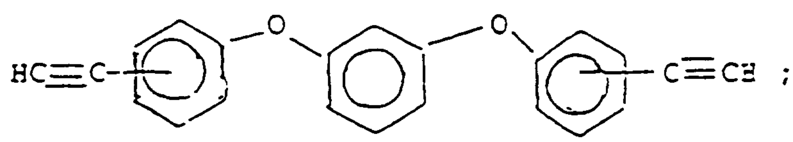

où les substituants -C≡CH peuvent chacun indépendamment être en position méta ou para.

**7.** Composite intercalé à matrice de fibres-résine, tel que défini dans la revendication 1, où lesdits filaments de renfort sont choisis dans le groupe constitué par des filaments de verre, de carbone, de graphite, de carbure de silicium, de bore, d'aramide, de polyester, de polyamide, de rayonne, de polybenzimidazole et de polybenzothiazole, et de tels filaments revêtus de métal.

**8.** Composite intercalé à matrice de fibres-résine, tel que défini dans la revendication 1, où une interface liée est formée entre la couche (A) et la couche (B).

**9.** Composite intercalé à matrice de fibres-résines selon la revendication 1, où la composition de résine thermodurcissable (A)(ii) comprend des composés époxydes choisis dans le groupe constitué par les éthers polyglycidyliques de phénols polyfonctionnels, les éthers polyglycidyliques des produits de chloration ou de bromation de phénols polyvalents, les éthers polyglycidyliques de novolaques, les composés polyépoxydes dérivés d'amines aromatiques et d'épichlorhydrine, et leurs mélanges.

**10.** Composite intercalé à matrice de fibres-résine tel que défini dans la revendication 9, où ladite composition de résine thermodurcissable (A)(ii), lorsqu'elle est durcie, et ladite résine intercalaire (B), en tant que solide, présentent toutes deux une contrainte de cisaillement à la rupture supérieure à 207 $N/mm^2$.

**11.** Composite intercalé à matrice de fibres-résine, tel que défini dans la revendication 10, où lesdits agents de durcissement sont des diamines.

**12.** Composite intercalé à matrice de fibres-résine, tel que défini dans la revendication 11, où lesdites diamines sont choisies dans le groupe constitué par la diaminodiphénylsulfone, le diaminodiphénylméthane et la phénylènediamine.

**13.** Composite intercalé à matrice de fibres-résine, tel que défini dans la revendication 10, où la résine intercalaire est choisie dans le groupe constitué par un polyester, un polyamide, un polyaramide, un polyarylate, un polycarbonate, un poly(ester carbonate), un polybenzimidazole, un polyimide, un polyéther-imide, un polyamide-imide, une polyéther-éther-cétone et leurs mélanges quelconques.

**14.** Composite intercalé à matrice de fibres-résine, tel que défini dans la revendication 13, où la résine intercalaire est une résine de polyéther-imide.

**15.** Composite intercalé à matrice de fibres-résine, tel que défini dans la revendication 1, où lesdits filaments de renfort constituent 60 à 70 % du poids de la matrice de fibres-résine et ladite composition de résine thermodurcissable (A)(ii) constitue 30 à 40 % du poids de la matrice de fibres-résine.

**16.** Composite intercalé à matrice de fibres-résine, tel que défini dans la revendication 1, où ladite couche de matrice de fibres-résine (A) a une épaisseur de 0,178 à 0,228 mm et ladite couche de résine intercalaire (B) a une épaisseur de 0,010 à 0,051 mm.

**17.** Composite intercalé à matrice de fibres-résine, tel que défini dans la revendication 1, où ladite composition de résine thermodurcissable comprend une résine choisie dans le groupe constitué par les résines thermodurcissables de type époxyde, polyimide, bismaléimide et à terminaison acétylène.

**18.** Composite intercalé à matrice de fibres-résine, tel que défini dans la revendication 1, où ladite résine thermoplastique (B)(i) contient une matière de renfort.

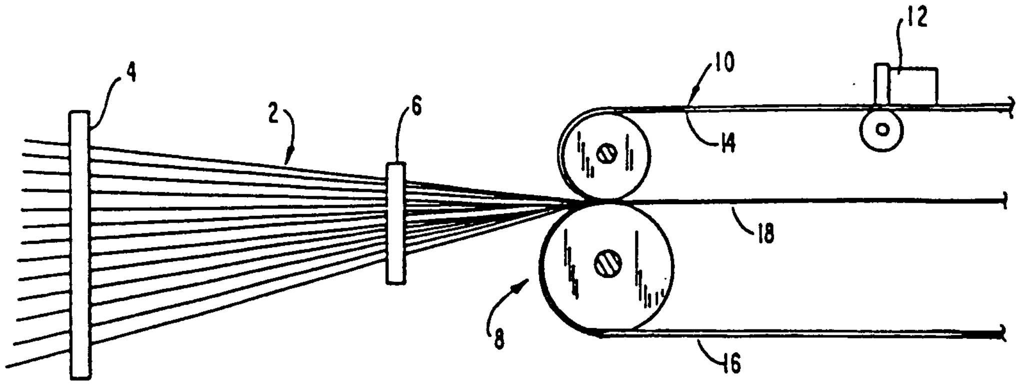


FIG. 1

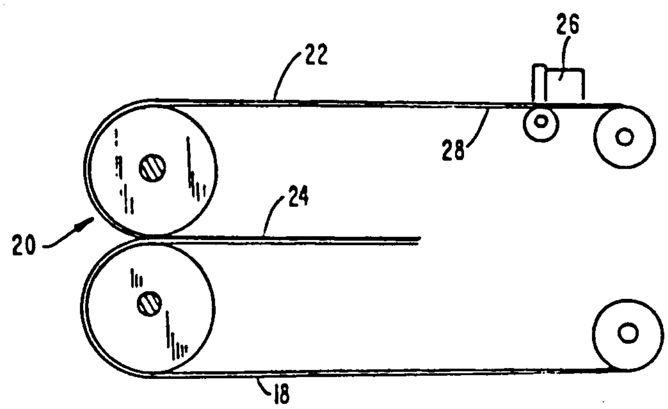


FIG. 2

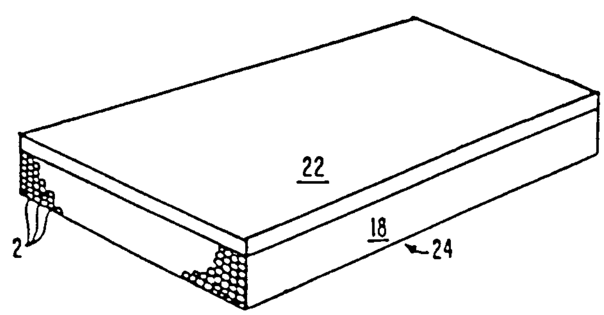


FIG. 3

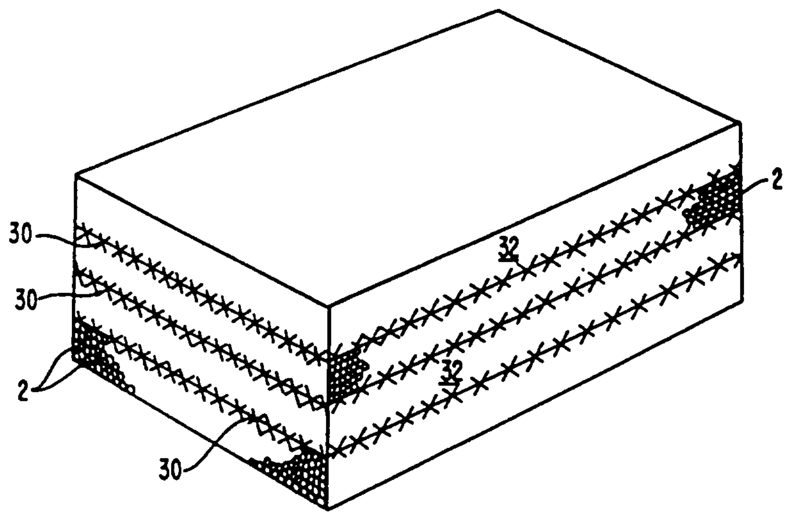


FIG. 4